# EUROPÄISCHE PATENTSCHRIFT

(11) **EP 1 099 062 B1**
(45) Veröffentlichungstag und Bekanntmachung des Hinweises auf die Patenterteilung: **14.01.2004**
(21) Anmeldenummer: 00945577.5
(22) Anmeldetag: 30.05.2000
(51) Int. Cl.: F16F 13/26

(54) **ZWEIKAMMERSTÜTZLAGER MIT HYDRAULISCHER DÄMPFUNG**
DUAL-CHAMBER SUPPORT BEARING WITH HYDRAULIC DAMPING
SUPPORT DE MOTEUR A DEUX CHAMBRES A AMORTISSEMENT HYDRAULIQUE

(30) Priorität: 01.06.1999 DE 19925105
(43) Veröffentlichungstag der Anmeldung: 16.05.2001
(73) Patentinhaber: ZF Lemförder Metallwaren AG, 49441 Lemförde (DE)
(72) Erfinder: ERSOY, Metin, D-65396 Walluf (DE); KRAMER, Klaus, D-49434 Neuenkirchen (DE)
(86) Internationale Anmeldenummer: PCT/DE2000/001729
(87) Internationale Veröffentlichungsnummer: WO 2000/073677

(56) Entgegenhaltungen:
- EP-A- 0 952 371
- WO-A-96/17184
- DE-A- 4 322 958
- DE-A- 19 812 837

## Beschreibung

Die Erfindung betrifft Zweikammerstützlager mit hydraulischer Dämpfung insbesondere für die Motorlagerung in Kraftfahrzeugen.

Zweikammerstützlager sind allgemein in verschiedenen Ausgestaltungen aus dem Stand der Technik bekannt. Zwischen Arbeitskammer und Ausgleichskammer kann bei einigen hydraulischen Stützlagern eine Membran unterschiedlicher Härte und Dehnbarkeit angeordnet sein. Eine solche Membran wird üblicherweise als Kopplungsmembran bezeichnet, wobei der Grad der Beweglichkeit der Membran die beeinflußbare Schwingungsamplitude und die Steifigkeit der Membran die Frequenz der zu dämpfenden Schwingung bestimmt. Ist eine derartige Membran relativ weich, werden die auf die Hydraulikflüssigkeit der Arbeitskammer einwirkenden Schwingungen ohne Widerstand zur angrenzenden Ausgleichskammer weitergegeben. Ist die Membran dagegen mit einer relativ steifen Struktur versehen, so wird sich durch die auf die Hydraulikflüssigkeit wirkenden Schwingungen in der Arbeitskammer ein Überdruck aufbauen, der zu einer Blähung der Entkopplungsmembran führt und auf diesem Wege eine bessere Dämpfung gewährleistet, wobei allerdings gleichzeitig eine höhere dynamische Steifigkeit auftritt. Bei den aus dem Stand der Technik bekannten Zweikammerstützlagern mit hydraulischer Dämpfung ist es zur Anpassung an unterschiedliche Betriebszustände wünschenswert, das Schwingungsverhalten des Hydrolagers entsprechend an diese Betriebszustände anzupassen.

Dies ist insbesondere deshalb von Bedeutung, da im Fahrzeugbetrieb vom Motor verursachte störende Schwingungen im wesentlichen in zwei unterschiedlichen Gattungen auftreten und deshalb zur Schwingungsdämpfung unterschiedliche Steifigkeiten der verwendeten Motorlager erforderlich machen. Insbesondere bei den seit einiger Zeit eingesetzten direkteingespritzten Dieselmotoren sind die unterschiedlichen Dämpfungseigenschaften von großer Bedeutung, da bei diesen Motoren die auftretenden Leerlaufschwingungen wesentlich höher sind als bei den bisher in der Kraftfahrzeugtechnik verwendeten Diesel- und Benzinmotoren, so daß für die Schwingungsdämpfung bei diesen Dieselmotoren eine besonders weiche Motorlagerung für den Leerlaufbetrieb notwendig ist, wohingegen im Fahrbetrieb eine wesentliche steifere Motorlagerung zur Schwingungsdämpfung vorteilhaft ist.

Eine Anpassung bei den angesprochenen mit einer Entkopplungsmembran zwischen Arbeitskammer und Ausgleichskammer versehenen Zweikammerstützlagern kann beispielsweise durch eine Veränderung der Membransteifigkeit erfolgen, indem beispielsweise der Abstützdurchmesser der Membran verkleinert oder vergrößert wird. Dies kann beispielsweise durch einen Stellmotor mit durch diesen betätigtem Stempel geschehen, welcher von unten gegen die Entkopplungsmembran drückt. Die bei den oben erwähnten direkt eingespritzten Dieselmotoren notwendigen unterschiedlichen Federsteifigkeiten lassen sich jedoch mit den aus dem Stand der Technik bekannten Zweikammerstützlager nicht erreichen, da die Werte der geforderten Federsteifigkeiten einen zu großen Unterschied aufweisen.

Ein bekanntes Zweikammerstützlager, das durch ein erstes hydraulisches Dämpfungsfederelement, ein Federelement, mindestens eine flüssigkeitsgefiillte Arbeitskammer und mindestens eine mit dieser durch einen Überströmkanal verbundene Ausgleichskammer gebildet ist, wobei dem Dämpfungsfederelement ein weiteres, blockierbares, in einer separaten Vorspannkammer angeordnetes Federelement seriell nachgeschaltet ist, geht beispielsweise aus der DE 43 22 958 A1 hervor.
Aus JP-Abstracts 62-270 841 (A) ist bei einem Zweikammerstützlager darüber hinaus ein weiteres Federelement mit einer hydraulischen Wirkverbindung zu einem ersten hydraulischen Dämpfungsfederelement bekannt, jedoch ist das in der Druckschrift offenbarte Federelement nicht steuer- oder blockierbar.

Aufgabe der vorliegenden Erfindung ist es daher, ein Zweikammerstützlager mit hydraulischer Dämpfung insbesondere für die Motorlagerung in Kraftfahrzeugen so weiterzuentwickeln, daß auch die beim Einsatz moderner Dieselmotoren geforderten sehr großen Unterschiede in der Federsteifigkeit derartiger Zweikammerstützlager für den Fahrbetrieb und den Leerlaufbetrieb erreicht werden können. Darüber hinaus sollen derartige Zweikammerstützlager in ihrer Bauweise kompakt und in ihrer Herstellung kostengünstig sein und unter allen geforderten Betriebsbedingungen zuverlässig arbeiten.

Diese Aufgabe wird entsprechend einer ersten Lösungsvariante dadurch gelöst, daß die das blockierbare Federelement aufweisende Vorspannkammer über mindestens zwei unabhängig voneinander steuerbare Schaltelemente mit der Arbeitskammer und der Ausgleichskammer hydraulisch verbunden ist. Durch die vom Motor in das Zweikammerstützlager eingeleiteten Schwingungen ist die Vorspannkammer mit Hydraulikflüssigkeit auffüllbar, was eine Blockierung des weiteren Federelementes ermöglicht.

Eine weitere Lösungsvariante der Aufgabe wird durch die technische Lehre des Anspruches 4 offenbart. Entsprechend den technischen Merkmalen dieses Anspruches ist die Vorspannkammer mit der Ausgleichskammer durch eine erste Leitung, in der eine durch die in das Zweikammerstützlager eingeleiteten Schwingungen angetriebene zur Auffüllung der Vorspannkammer mit Hydraulikflüssigkeit vorgesehene Pumpeinrichtung angeordnet ist, und eine zweite Leitung mit einem darin eingesetzten elektromagnetischen Schaltventil verbunden.

Durch die erfindungsgemäße Ausgestaltungen entsprechend beiden Lösungsmöglichkeiten wird ohne eine äußere Energiequelle nur durch die in das Zweikammerstützlager eingeleiteten Schwingungen des durch das Zweikammerstützlager schwingungsmäßig zu dämpfenden Motors bei Bedarf eine Blockierung des zweiten, seriell mit dem ersten Dämpfungsfederelement geschalteten Federelementes herbeigeführt.

Durch die Blockierung des weiteren Federelementes ist die Gesamtsteifigkeit des Motorlagers wesentlich größer als wenn beide in Reihe geschalteten Federelemente wirksam sind. Hierdurch wird bei dem erfindungsgemäßen Zweikammerstützlager sowohl eine weiche Dämpfungscharakteristik für den Leerlaufbetrieb eines Kraftfahrzeugmotors als auch eine steife Dämpfungscharakteristik für den normalen Fahrbetrieb bereitgestellt. Die Blockierung des weiteren Federelementes läßt sich über das zwischen Arbeitskammer bzw. Ausgleichskammer vorhandene Schaltelement, welches vorzugsweise ein elektromagnetisches Schaltventil ist, aufheben, indem ein Druckausgleich zwischen der Vorspannkammer und der Arbeitskammer bzw., der Ausgleichskammer herbeigeführt wird.

Spezielle weitere Ausgestaltungen der ersten erfindungsgemäßen Lösung ergeben sich aus den Unteransprüchen 2 und 3, spezielle Ausgestaltungen des Erfindungsgegenstandes gemäß Anspruch 4 sind den Merkmalen des Unteranspruches 5 zu entnehmen.

Darüber hinaus sind weitere vorteilhafte Ausgestaltungen beider erfindungsgemäßen Lösungen in den Ansprüchen 6 bis 8 offenbart.

Je ein Ausführungsbeispiel der beiden erfindungsgemäßen Lösungsvarianten sind den beigefügten Zeichnungen zu entnehmen. Es zeigt:
- Figur 1: ein Zweikammerstützlager mit den Merkmalen entsprechend Anspruch 1 in Schnittdarstellung in der Schaltstellung mit weicher Dämpfungscharakteristik,
- Figur 2: das Zweikammerstützlager aus Figur 1 in der Schaltstellung mit harter Dämpfungscharakteristik,
- Figur3: ein Zweikammerstützlager mit den Merkmalen entsprechend Anspruch 4 in Schnittdarstellung in der Schaltstellung mit weicher Dämpfungscharakteristik,
- Figur 4: das Zweikammerstützlager aus Figur 3 in der Schaltstellung mit harter Dämpfungscharakteristik und die
- Figuren 5a-d: eine vergrößerte Darstellung der Pumpvorrichtung des Zweikammerstützlagers gemäß Figur3 in verschiedenen Pumpstellungen

Sämtliche Zeichnungen zeigen Schnittdarstellungen und Detailansichten der erfindungsgemäßen Zweikammerstützlager in eingebautem, d.h. belastetem Zustand.

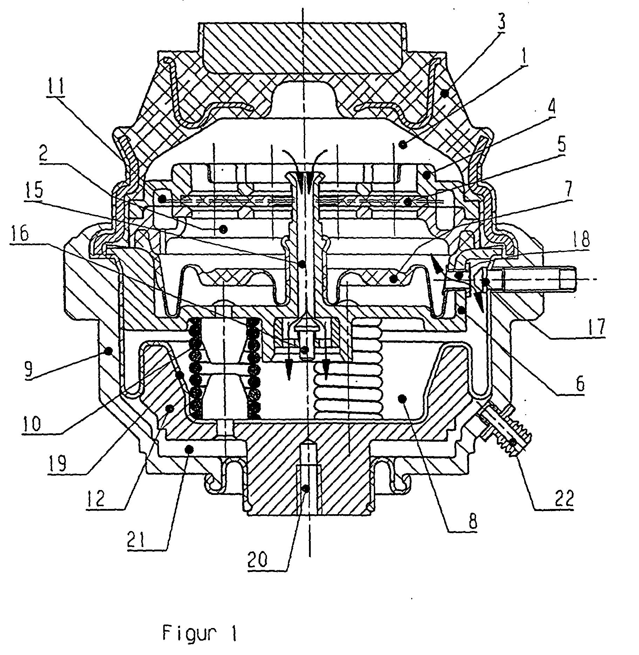

In der Figur 1 ist ein Zweikammerstützlager dargestellt, welches eine Arbeitskammer 1 aufweist, die an ihrer oberen zum zu lagernden Motor hingewandten Seite durch eine Gummiwandung 3 begrenzt ist. Die untere Begrenzung der Arbeitskammer 1 erfolgt durch eine Zwischenplatte 4, in deren Mittelbereich eine aus elastischem Material hergestellte Entkopplungsmembran 5 eingelassen ist. Unterhalb der Entkopplungsmembran 5 und der Zwischenplatte 4 befindet sich eine Ausgleichskammer 2; an der Unterseite der Ausgleichskammer 2 befindet sich eine Trennwand 6. Gegenüber der festen Trennwand 6 ist die Ausgleichskammer 2 mit einer aus elastischem Material gefertigten Membran 7 abgedichtet.

An der unteren der Ausgleichskammer 2 abgewandten Seite der Trennwand 6 ist ein weiterer Hohlraum als Vorspannkammer 8 angeordnet, deren Seitenwände von einem topfförmigen Gehäuse 9 gebildet werden und in deren Innern drei auf einem konzentrischen Kreis zur Mittellängsachse befindliche Schraubenfedern 10 angeordnet sind. In der Darstellung der Figur 1 ist nur eine der Schraubenfedern 10 dargestellt. Die drei Schraubenfedern 10 von denen in der Figur 1 nur eine dargestellt ist, bilden ein gemeinsames weiteres Federelement unterhalb des ersten hydraulischen Dämpfungsfederelementes, welches durch die Gummiwandung 3, die Arbeitskammer 1, die Entkopplungsmembran 5, die Ausgleichskammer 2 sowie einen zwischen Arbeitskammer 1 und Ausgleichskammer 2 befindlichen Überströmkanal 11 gebildet wird. Die Schraubenfedern 10 stützen sich an ihrer oberen Seite an der Trennwand 6 ab, das entgegengesetzte Ende der Schraubenfedern 10 liegt dem gegenüber an einer Bodenplatte 12 des Zweikammerstützlagers an, die in axialer Richtung der Hauptlängsachse des Zweikammerstützlagers gegenüber dem Gehäuse 9 in diesem verschieblich angeordnet ist und den Boden der Vorspannkammer 8 bildet. Gegenüber den Wandungen des Gehäuses 9 sowie der Bodenplatte 12 ist die Vorspannkammer durch eine weitere Rollmembran 19 aus elastischen Material abgedichtet. Die Bodenplatte 12 besitzt an seiner der Vorspannkammer 8 abgewandten Unterseite eine Gewindebohrung 20 zur karosserieseitigen Festlegung des Zweikammerstützlagers.

In der Figur 1 ist ersichtlich, daß sich zwischen der Bodenplatte 12 und dem unteren karosserieseitigen Bereich des Gehäuses 9 ein Spalt 21 von etwa 3-5 mm befindet. Aufgrund der Tatsache, daß die motorseitig festgelegte Gummiwandung 3 und die karosserieseitig festgelegte Bodenplatte 12 feste Positionen haben, führt die Einleitung von Schwingungen in das Zweikammerstützlager zu einer Bewegung der Trennwand 6 zwischen dem ersten Gummifederelement, welches hydraulisch durch die in der Arbeitskammer 1, der Ausgleichskammer 2 und dem Überströmkanal befindliche Hydraulikflüssigkeit gedämpft wird, und dem zweiten durch die Schraubenfedern 10 aus Stahl gebildete zweite Federelement. Das Zusammenspiel beider Federelemente gewährleistet eine wirkungsvolle Dämpfung niedrigfrequenter Schwingungen mit großer Amplitude durch seine weiche Gesamtfedersteifigkeitscharakteristik.

Aus der Figur 1 ist ferner ersichtlich, daß die Trennwand 6 in ihrer Mitte einen rohrförmigen bis nach oben in die Arbeitskammer 1 reichenden Teilbereich 15 aufweist, der eine Verbindung zwischen der Arbeitskammer 1 und der Vorspannkammer 8 bildet. Die untere Öffnung des rohrförmigen Teilbereiches 15 ist durch ein als Rückschlagventil gestaltetes Schaltelement 16 verschlossen. Zwischen der Vorspannkammer 8 und der Ausgleichskammer 2 befindet sich ein weiteres als elektromagnetisches Schaltventil ausgestaltetes Schaltelement 17, das im rechten Teilbereich der Figur 1 dargestellt ist.

Das Zusammenspiel der Schaltelemente 16 und 17 sowie der Vorspannkammer 8 und der Bodenplatte 12 ermöglicht den Aufbau eines hydraulischen Druckkissens innerhalb der Vorspannkammer 8 allein durch die über den Motor in das Zweikammerstützlager eingeleiteten Schwingungen. Durch den Aufbau eines derartigen Druckkissens in der Vorspannkammer 8 wird das gesamte Hydrolager bis auf die Bodenplatte 12 gegenüber der Karosserie angehoben und somit der Boden des Gehäuses 9 nach oben gegen die Bodenplatte 12 gedrückt, so daß durch die feste Verbindung von Zwischenplatte 6, Gehäuse 9 und Bodenplatte 12 der Kraftfluß nicht mehr über die Schraubenfedern 10 erfolgt, die damit ohne Funktion sind. Die Außerfunktionsetzung der Schraubenfedern 10 führt zu einer wesentlichen Verhärtung der Dämpfungscharakteristik des Zweikammerstützlagers, da nur noch das erste Gummifederelement wirksam ist.

Voraussetzung für den Aufbau des Druckkissens innerhalb der Vorspannkammer 8 ist eine Trennung der Verbindung zwischen Vorspannkammer 8 und Ausgleichskammer 2 durch Verschließen des Schaltventils 17. Durch diese Maßnahme wird ein Rückfluß von Hydraulikflüssigkeit in die Ausgleichskammer 2, wie er bei in der Figur 1 dargestelltem geöffneten Schaltventil 17 durch den Pfeil P angedeutet ist, verhindert. Der Aufbau des Druckkissens geschieht durch einen durch Einleitung von Schwingungen in die Arbeitskammer 1 erzeugten Überdruck, der dazu führt, daß über den rohrförmigen Teilbereich 15 von der Arbeitskammer 1 Hydraulikflüssigkeit über das durch den Überdruck geöffnete Rückschlagventil 16 in die Vorspannkammer 8 gelangt.

Die in die Vorspannkammer eingedrungene Hydraulikflüssigkeit drückt das Hydrolager gegen die Bodenplatte 12 und bewirkt eine Überbrückung der Schraubenfedern 10.

Das Absenken des Hydrolagers kann durch Anschluß einer Unterdruckleitung an einen Anschlußnippel 22 unterstützt werden. Der Anschlußnippel 22 mündet im Innern des Gehäuses 9 in den Spalt 21 unterhalb der Bodenplatte, so daß der angeschlossene Unterdruck eine Saugwirkung auf das Unterteil des Gehäuses 9 bewirkt.

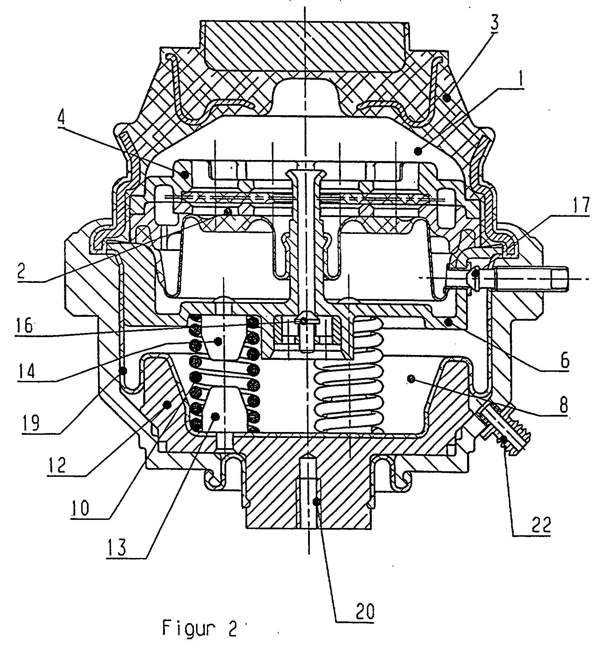

Die Position der Bodenplatte 12 und des Schaltventils 17 sind in der Figur 2 verdeutlicht, die das Zweikammerstützlager in seinem Betriebszustand mit harter Dämpfungscharakteristik zeigt. Ein Verrutschen der Schraubenfedern 10 in dieser Stellung wird durch je einen in das obere und untere Ende der jeweiligen Schraubenfeder 10 eingreifenden Dorn 13 bzw. 14 verhindert.

Soll das in der Vorspannkammer 8 befindliche Druckkissen, welches die Dämpfungsmöglichkeit der Schraubenfedern 10 unwirksam macht, beseitigt werden, so ist es notwendig, daß die Bodenplatte 12 in seine ursprüngliche Position zurückkehren kann, wie sie in der Figur 1 dargestellt ist. Der Abbau des Druckkissens innerhalb der Vorspannkammer 8 geschieht durch das Öffnen des elektromagnetischen Schaltventiles 17, wodurch ein Abfließen von Hydraulikflüssigkeit durch die Verbindungsbohrung 18 in die Ausgleichskammer 2 erfolgen kann. Die Rückkehr in die angehobene Position der Bodenplatte 12 führt dazu, daß sowohl das Gummidämpfungsfederelement im oberen Bereich des Zweikammerstützlagers als auch das durch die Schraubenfedern 10 gebildete weitere Federelement wieder wirksam sind und somit eine insgesamt weichere Dämpfungscharakteristik für das Zweikammerstützlager besteht als diejenige, in der nur das obere hydraulische Gummidämpfungsfederelement wirksam ist.

Aus den Figuren 1 und 2 wird somit deutlich, daß eine je nach Federeigenschaften der Schraubenfedern 10 sehr unterschiedliche Steifigkeit des Zweikammerstützlagers bei Blockierung bzw. bei Nichtblockierung des weiteren durch die Schraubenfedern 10 gebildeten Federelementes herbeigeführt werden kann. Die Blockierung der Schraubenfedern 10 geschieht hierbei nur durch die infolge der in das Zweikammerstützlager eingeleiteten Schwingungen herbeigeführten Pumpwirkung durch die Arbeitskammer 1 bzw. durch das Öffnen und Schließen der Verbindungsbohrung 18 durch Betätigung des elektromagnetischen Schaltventiles 17. Es läßt sich somit auf äußerst kompakte Weise eine Möglichkeit schaffen, unterschiedliche Dämpfungseigenschaften mit Hilfe eines einzigen Zweikammerstützlagers zu erreichen.

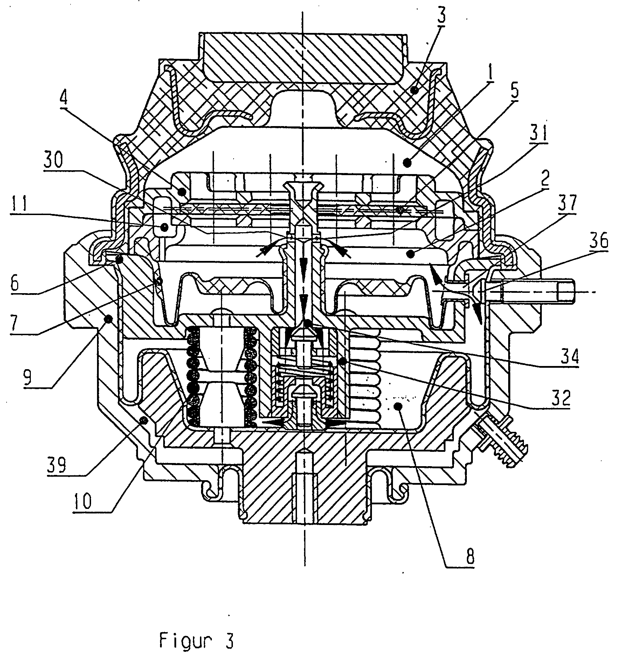

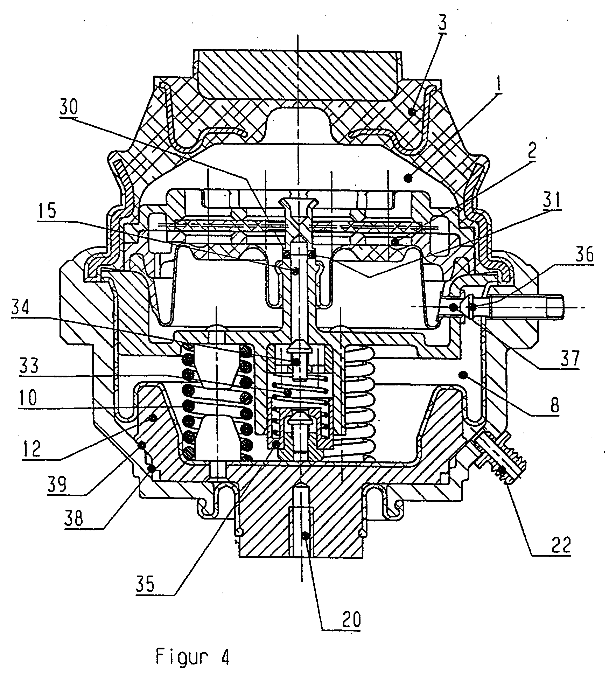

Eine weitere erfindungsgemäße Lösungsvariante der Aufgabenstellung ist in den Figuren 3 und 4 durch das dort dargestellte Zweikammerstützlager realisiert. Dieses Zweikammerstützlager weist ebenfalls - wie das bereits oben ausführlich beschriebene Stützlager der ersten Lösungsvariante - eine Arbeitskammer 1 auf, die an ihrer oberen zum zu lagernden Motor hingewandten Seite durch eine Gummiwandung 3 begrenzt ist. Die untere Begrenzung der Arbeitskammer 1 erfolgt durch eine Zwischenplatte 4, in deren Mittelbereich eine aus elastischem Material hergestellte Entkopplungsmembran 5 eingelassen ist. Unterhalb der Entkopplungsmembran 5 und der Zwischenplatte 4 befindet sich eine Ausgleichskammer 2, wobei sich an der Unterseite der Ausgleichskammer 2 eine feste Trennwand 6 befindet. Gegenüber der festen Trennwand 6 ist die Ausgleichskammer 2 mit einer aus elastischem Material gefertigten Membran 7 abgedichtet.

An der unteren der Ausgleichskammer 2 abgewandten Seite der Trennwand 6 ist eine Vorspannkammer 8 angeordnet, deren Seitenwände von einem topfförmigen Gehäuse 9 gebildet werden und in deren Innerem drei auf einem konzentrischen Kreis zur Mittellängsachse befindliche Schraubenfedern 10 angeordnet sind. Diese Schraubenfedern 10 bilden gemeinsam ein weiteres Federelement, welches mit dem ersten aus Arbeitskammer 1, Ausgleichskammer 2, Gummimembran 3, Membran 4 und Überströmkanal 11 gebildeten hydraulischen Gummiefederdämpfungselement in Reihe geschaltet ist. Die Schraubenfedern 10 stützen sich an ihrer oberen Seite an der festen Trennwand 6 ab, das entgegengesetzte Ende der Schraubenfedern 10 liegt demgegenüber an einer Bodenplatte 12 des Zweikammerstützlagers an, die in axialer Richtung der Hauptlängsachse des Zweikammerstützlagers gegenüber dem Gehäuse 9 in diesem verschieblich angeordnet ist und den Boden der Vorspannkammer 8 bildet. Gegenüber den Wandungen des Gehäuses 9 sowie der Bodenplatte 12 ist die Vorspannkammer durch eine weitere Membran 19 aus elastischem Material abgedichtet. Die Bodenplatte 12 besitzt an seiner der Vorspannkammer 8 abgewandten Unterseite ebenfalls eine Gewindebohrung 20 zur karosserieseitigen Festlegung des Zweikammerstützlagers.

Aus der Figur 3 ist ersichtlich, daß analog dem Ausführungsbeispiel der Figuren 1 und 2 sich zwischen der Bodenplatte 12 und dem unteren karosserieseitigen Bereich des Gehäuses 9 ein Spalt 21 von etwa 3 - 5 mm befindet. Aufgrund der Tatsache, daß die motorseitig festgelegte Gummiwandung 3 und die karosserieseitig festgelegten Bodenplatte 12 feste Positionen haben, führt die Eileitung von Schwingungen in das Zweikammerstützlager zu einer Bewegung der Trennwand 6 zwischen dem ersten Gummifederelement, welches hydraulisch durch die in der Arbeitskammer 1, der Ausgleichskammer 2 und dem Überströmkanal 11 befindliche Hydraulikflüssigkeit gedämpft wird, und dem zweiten durch die Schraubenfedern 10 aus Stahl gebildeten zweiten Federelement. Das Zusammenspiel beider Federelemente gewährleistet eine wirkungsvolle Dämpfung niedrigfrequenter Schwingungen mit großer Amplitude durch die insgesamt weiche Gesamtfedersteifigkeitscharakteristik des Zweikammerstützlagers in diesem Betriebszustand.

Das Ausführungsbeispiel der Figuren 3 und 4 zeichnet sich gegenüber der ersten Variante dadurch aus, daß die Trennwand 6 in ihrer Mitte einen rohrförmigen Teilbereich 15 ausweist, der in seinem oberen, der Trennwand 6 abgewandten Ende mit der Zwischenplatte 4 verbunden ist. Der rohrförmige Teilbereich 15 besitzt, wie dies den Figuren 3 und 4 zu entnehmen ist, zwei Verbindungsbohrungen 30 und 31 zur Ausgleichskammer 2. An der Unterseite der Trennwand 6 ist ein hohlzylinderförmiger Vorsprung 32 angeordnet. Innerhalb des Vorsprunges 32 befindet sich eine erste Schaltvorrichtung 33, die aus einem Rückschlagventil 34 und einem darunter befindlichen Plungerzylinder besteht. Der Plungerzylinder 35 bildet eine Pumpvorrichtung, mit deren Hilfe aus der Ausgleichskammer über die Verbindungsbohrungen 30 und 31, den rohrförmigen Teilbereich 15 und das Rückschlagventil 34 Hydraulikflüssigkeit in die Vorspannkammer 8 gepumpt werden kann. Neben der ersten Schaltvorrichtung 33 weist das erfindungsgemäße Zweikammerstützlager der Figuren 3 und 4 eine zweite Schaltvorrichtung 36 auf, die aus einem elektromagnetischen Schaltventil besteht und zum Schließen einer Verbindungsbohrung 37 zwischen Vorspannkammer 8 und Ausgleichskammer 2 geeignet ist.

Bei dem in Figur 3 dargestellten Betriebszustand des Zweikammerstützlagers sind sowohl die Federelemente 10 als auch das obere hydraulische Gummifederdämpfungselement wirksam. Die mit Hilfe des Plungerzylinders 35 von der Ausgleichskammer in die Vorspannkammer transportierte Hydraulikflüssigkeit kann problemlos wieder in die Ausgleichskammer 2 zurückwandern, da das Schaltventil 36 geöffnet ist und die Hydraulikflüssigkeit durch die Verbindungsbohrung 37 hindurchfließen kann.

Ist durch den Betriebszustand des angeschlossenen Motors eine Versteifung der Dämpfungscharakteristik des Zweikammerstützlagers gewünscht, so wird das Schaltventil 36 angesteuert und verschließt die Verbindungsbohrung 37. Ein Zurückfließen von Hydraulikflüssigkeit in die Ausgleichskammer 2 ist damit ausgeschlossen. Die von dem Plungerzylinder 35 von der Ausgleichskammer 2 in die Vorspannkammer 8 transportierte Hydraulikflüssigkeit dient nunmehr dazu, innerhalb der Vorspannkammer 8 ein Druckkissen aufzubauen, welches analog der bereits beschriebenen Funktionsweise der ersten Lösungsvariante dazu führt, die Bodenplatte 12 mit dem Gehäuse 9 in Anschlag zu bringen. Der Anschlag erfolgt durch eine zylindrische Anschlagfläche 38 sowie durch eine konische Anschlagfläche 39. Durch diese doppelte Verriegelung zwischen Bodenplatte 12 und Gehäuse 9 wird gewährleistet, daß auch bei sehr großen Radialkräften ein Kippen des Zweikammerstützlagers verhindert wird, da die auftretenden Seitenkräfte durch die Anschlagflächen zuverlässig übertragen werden.

Soll das Zweikammerstützlager vom Betriebszustand der harten Dämpfungscharakteristik, wie dies in Figur 4 dargestellt ist, wieder in den Betriebszustand mit weicher Dämpfungscharakteristik überführt werden, so ist es notwendig, daß in der Vorspannkammer 8 befindliche Druckkissen, welches die Dämpfungsmöglichkeit der Schraubenfedern 10 unwirksam macht, aufzuheben. Der Abbau des Druckkissens innerhalb der Vorspannkammer 8 geschieht durch das Öffnen des elektromagnetischen Schaltventils 36, so daß durch die Wiederöffnung der Verbindungsbohrung 37 Hydraulikflüssigkeit zurück in die Ausgleichskammer 2 strömen kann.

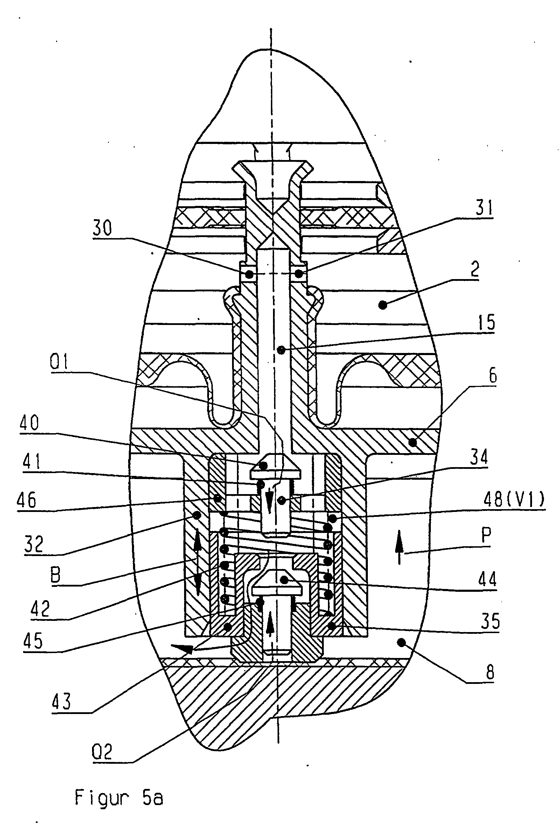

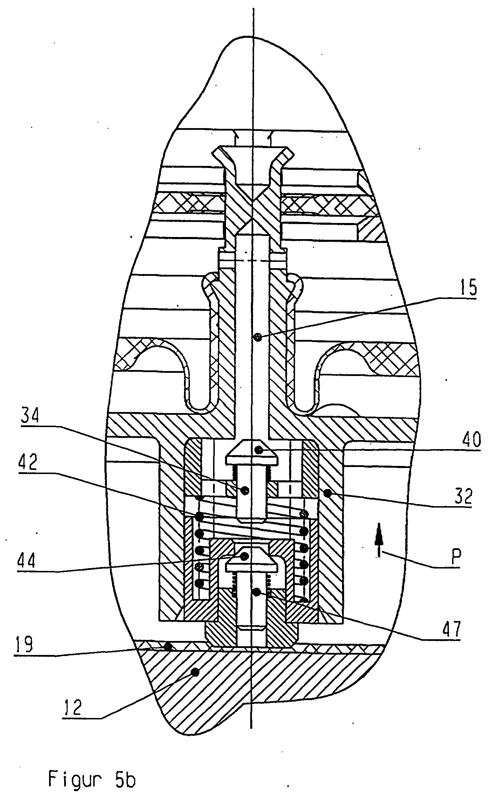

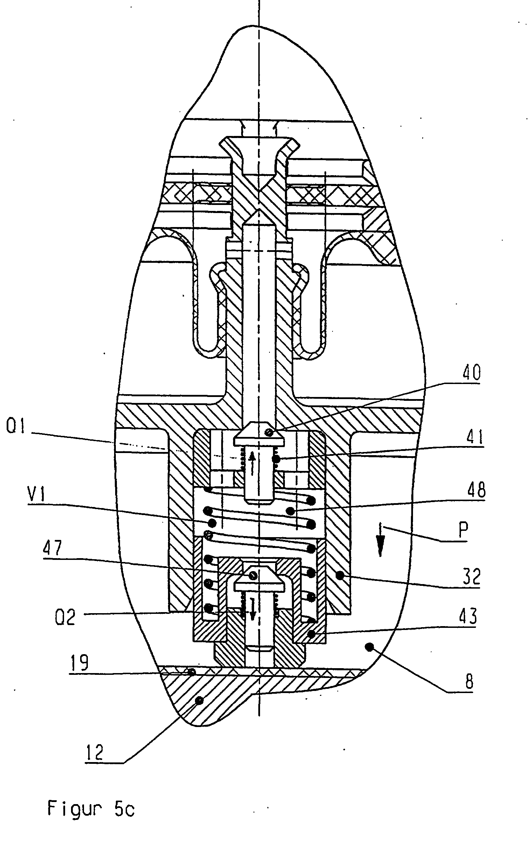

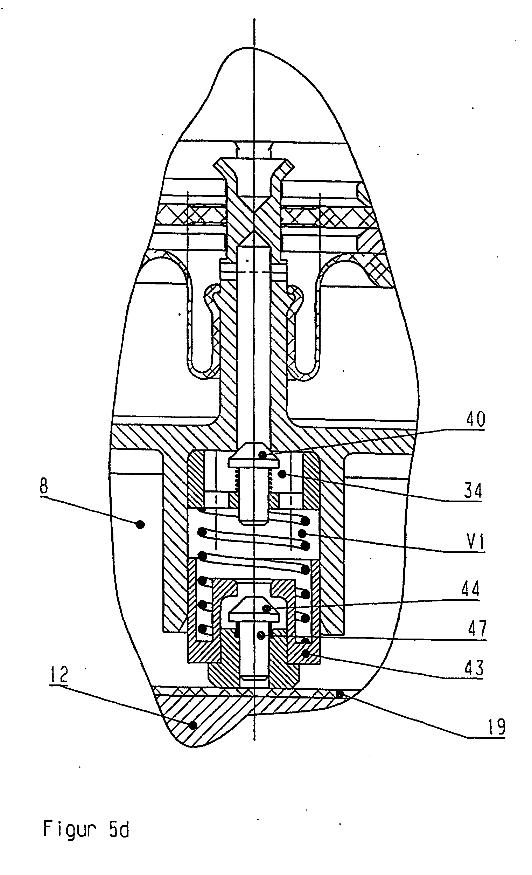

Die Funktionsweise des als Pumpvorrichtung vorgesehenen Plungerzylinders 35 wird im folgenden anhand der Figuren 5 a-d näher erläutert. Die Figuren zeigen eine vergrößerte Schnittdarstellung des Rückschlagventils 34 sowie des sich ebenfalls im Vorsprung 32 befindlichen Plungerzylinders 35.

Die Pumpwirkung des Plungerzylinders 35 basiert auf der Bewegung der Trennwand 6 im "weichen" Zustand des Hydrolagers, d. h.in den Fällen, in denen eine Schwingungseinleitung in das Zweikammerstützlager erfolgt. Aufgrund der Tatsache, daß die motorseitig festgelegte Gummiwandung 3 und die karosserieseitig festgelegte Bodenplatte 12 feste Positionen einnehmen, führt die Einleitung von Schwingungen in das Zweikammerstützlager zu einer Auf- und Abbewegung der Trennwand 6 entsprechend dem Pfeil B in Figur 5 a. Ein Pumpzyklus des Plungerzylinders 35 wird durch eine Aufwärts- und Abwärtsbewegung entsprechend einer Schwingung der Trennwand 6 bewirkt. Die Figuren 5 a - 5 d geben verschiedene Stadien des Pumpzyklus wieder.

Der Plungerzylinder 35 besteht im Wesentlichen aus einem Kolben 43, der innerhalb des zylindrischen Vorsprunges 32 der Trennwand 6 axial in Richtung der Hauptachse des Zweikammerstützlagers verschieblich ist, einer Distanzfeder 42, die in der Zwischenkammer 48 mit einem veränderbaren Volumen V₁ zwischen der Oberseite des Kolbens 43 und der Unterseite des Rückschlagventilgehäuses 46 angeordnet ist sowie einem zentrisch im Inneren angeordneten Rückschlagventil, bestehend aus dem Ventilsitz 44 und der Andruckfeder 45. In der Figur 5 a ist diejenige Stellung des Zweikammerstützlagers dargestellt, in der sowohl das hydraulische Gummiefederdämpfungselement als auch das Schraubenfederelement wirksam sind. Dies bedeutet, daß in der Vorspannkammer kein Druckkissen aufgebaut ist. Die Darstellung der Figur 5 a zeigt, daß der Kolben 35 des Plungerzylinders in den zylindrischen Vorsprung 32 der Trennwand 6 eingefahren ist, sowohl das Rückschlagventil 34 als auch das im Kolben 43 befindliche Rückschlagventil 47 sind geöffnet. Das Kammervolumen V₁ zwischen dem Rückschlagventil und dem Kolben 43 weist einen kleinen Wert auf.

Wird entsprechend dem Pfeil P in Figur 5 a die Trennwand 6 nach oben in Richtung Ausgleichskammer bewegt, so vergrößert sich das Volumen V₁ der Zwischenkammer 48. Es entsteht somit in der Kammer 48 ein Unterdruck, der dazu führt, daß der Ventilsitz 44 des Rückschlagventils 47 unter Einwirkung des Unterdruckes und der Federkräfte der Andruckfeder 45 entsprechend dem Pfeil Q₂ nach oben bewegt wird, was bedeutet, daß sich das Rückschlagventil 47 schließt. Gleichzeitig wird durch den Überdruck in der Kammer 48 Hydraulikflüssigkeit durch das geöffnete Rückschlagventil 34 aus der Ausgleichskammer 2 über die Verbindungsbohrungen 30 und 31 sowie den rohrförmigen Teilbereich 15 in die Zwischenkammer 48 gesaugt.

Die Figur 5 b stellt dasjenige Zwischenstadium der Aufwärtsbewegung der Trennwand 6 dar, in der das Rückschlagventil 34 geöffnet ist und sich das Rückschlagventil 47 geschlossen hat.

Aufgrund der Schwingungsbewegung der Trennwand 6 wird sich diese entsprechend dem in Figur 5 c dargestellten Pfeil P von der in den Figuren 5 a und 5 b dargestellten Aufwärtsbewegung anschließend eine Abwärtsbewegung ausführen, wodurch sich das größtmögliche Volumen V₁ der Zwischenkammer 48 im Moment der Bewegungsumkehr anschließend wieder verkleinert. Die Verkleinerung des Volumens führt zu einem Druckanstieg innerhalb der Zwischenkammer 48, wodurch sich zum einen der Ventilsitz 40 des Rückschlagventils aufgrund des steigenden Druckes und der Kraft der Andruckfeder 41 entsprechend dem Pfeil Q₁ nach oben bewegt und sich das Rückschlagventil 34 infolgedessen schließt. Die weitere Bewegung der Trennwand 6 in Richtung des Pfeiles P führt zu einem weiteren Druckanstieg innerhalb der Zwischenkammer 48, wodurch sich das innerhalb des Kolbens 43 angeordnete Rückschlagventil 47 öffnet. Durch das geöffnete Rückschlagventil 47 wird infolge der weiteren Abwärtsbewegung der Trennwand 6 die in der Zwischenkammer 48 befindliche Hydraulikflüssigkeit in die Vorspannkammer 8 gedrückt.

Die Figur 5 d zeigt ein Zwischenstadium während der Abwärtsbewegung der Trennwand 6, in der das Rückschlagventil 34 geschlossen und das Rückschlagventil 47 geöffnet ist, so daß die innerhalb der Zwischenkammer 48 befindliche Hydraulikflüssigkeit nach unten in die Vorspannkammer 8 entweichen kann.

Hat die Trennwand 6 im Rahmen ihrer Schwingungsamplitude den unteren Totpunkt ihrer Bewegung durchschritten, in dem die Zwischenkammer 48 ihr kleinstes Volumen V₁ eingenommen hat, so beginnt ein neuer Schwingungszyklus durch die erneute Aufwärtsbewegung der Trennwand 6 entsprechend dem Pfeil P aus Figur 5 a. Die erneute Aufwärtsbewegung der Trennwand 6 führt zu einem Unterdruck innerhalb der Zwischenkammer 48, so daß sich das Rückschlagventil 47 - wie bereits bei der Erläuterung der Figur 5 a geschehen - schließt, während sich das Rückschlagventil 34 öffnet, so daß erneut Hydraulikflüssigkeit aus der Ausgleichskammer 2 in die Zwischenkammer 48 strömen kann.

Somit wird bei jedem Schwingungszyklus der innerhalb des Zweikammerstützlagers liegenden Trennwand 6 Hydraulikflüssigkeit in die Vorspannkammer 8 gedrückt, welches zum Aufbau des Druckkissens dient, solange das Schaltventil 36 die Verbindungsbohrung 37 verschließt und somit keine Hydraulikflüssigkeit aus der Vorspannkammer entweichen kann.

Vorteil dieser erfindungsgemäßen Anordnung ist darüber hinaus, daß der Kolben 43 durch den allmählichen Aufbau des Druckkissens innerhalb der Vorspannkammer 8 ebenfalls vorgespannt wird, so daß die Schwingungen langsam ausklingen und der Plungerzylinder nicht mehr betätigt wird. In diesem Zustand ist entsprechend Figur 4 die Bodenplatte 12 in Anschlag mit dem Gehäuse 9, so daß die zwischen Bodenplatte 12 und Trennwand 6 geschalteten Schraubenfedern wirkungslos sind.

Eine Rückführung in denjenigen Zustand des Zweikammerstützlagers, in dem die Schraubenfedern 10 wieder wirksam sind, wird durch Freischaltung der Verbindungsöffnung 37 durch das Schaltventil 36 herbeigeführt. Durch die Freischaltung kann der Überdruck innerhalb der Vorspannkammer 8 abgebaut werden, so daß die Verriegelung zwischen Bodenplatte 12 und Gehäuse 9 aufgehoben wird.

Entsprechend einer besonderen Ausgestaltung kann der Aufbau des Druckkissens bzw., die Verriegelung zwischen Bodenplatte 12 und Gehäuse 9 dadurch unterstützt werden, daß an einen in der Gehäusewandung eingebrachten Anschlußnippel 22 ein Unterdruckschlauch angeschlossen wird, der die Verriegelungsbewegung zwischen Bodenplatte 12 und Gehäuse 9 zusätzlich unterstützt.

Aus den oben gemachten Ausführungen wird deutlich, daß ein Zweikammerstützlager mit hydraulischer Dämpfung und zwei sehr unterschiedlichen Dämpfungsfederraten geschaffen wird, bei der der Übergang von einem weichen Dämpfungsverhalten zu einem harten Dämpfungsverhalten nur durch die in das Zweikammerstützlager eingeleiteten Schwingungen herbeigeführt werden kann. Es erübrigt sich somit ein externer Antrieb für den Aufbau eines entsprechenden Druckkissens, so daß eine sehr kompakte und preisgünstige Lösung möglich ist. Da die Flüssigkeit zum Aufbau eines entsprechenden Druckkissens inkompressiebel ist, kann das Gesamtsystem sehr hohe Axialkräfte aufnehmen. Darüber hinaus haben die vorgestellten Lösungsvarianten den Vorteil, daß irgendwelche losen Bauteile innerhalb des Zweikammerstützlagers nicht vorhanden sind und das Lager darüber hinaus ein hermetisch dicht geschlossenes System bildet.

### Bezugszeichenliste:

- 1.: Arbeitskammer
- 2.: Ausgleichskammer
- 3.: Gummiwandung
- 4.: Zwischenplatte
- 5.: Entkopplungsmembran
- 6.: Trennwand
- 7.: Membran
- 8.: Vorspannkammer
- 9.: Gehäuse
- 10.: Schraubenfeder
- 11.: Überströmkanal
- 12.: Bodenplatte
- 13.: Dorn
- 14.: Dorn
- 15.: rohrförmiger Teilbereich
- 16.: Schaltelement (Rückschlagventil)
- 17.: Schaltelement (elektromagnetisches Schaltventil)
- 18.: Verbindungsbohrung
- 19.: Rollmembran
- 20.: Gewindebohrung
- 21.: Spalt
- 22.: Anschlußnippel
- 30.: Verbindungsbohrungen
- 31.: Verbindungsbohrungen
- 32.: Vorsprung
- 33.: Schaltvorrichtung
- 34.: Rückschlagventil
- 35.: Plungerzylinder
- 36.: Schaltventil
- 37.: Verbindungsbohrung
- 38.: zylindrische Anschlagfläche
- 39.: konische Anschlagfläche
- 40.: Ventilsitz
- 41.: Andruckfeder
- 42.: Distanzfeder
- 43.: Kolben
- 44.: Ventilsitz
- 45.: Andruckfeder
- 46.: Rückschlagventilgehäuse
- 47.: Rückschlagventil
- 48.: Zwischenkammer

## Patentansprüche

1. Zweikammerstützlager mit hydraulischer Dämpfung insbesondere für die Motorlagerung in Kraftfahrzeugen, das durch ein erstes hydraulisches Dämpfungsfederelement, ein Federelement (3), mindestens eine flüssigkeitsgefüllte Arbeitskammer (1) und mindestens eine mit dieser durch einen Überströmkanal (11) verbundene Ausgleichskammer (2) gebildet ist, wobei dem Dämpfungsfederelement ein weiteres, blockierbares, in einer separaten Vorspannkammer (8) angeordnetes Federelement (10) seriell nachgeschaltet ist,
**dadurch gekennzeichnet, daß**
die das blockierbare Federelement (10) aufweisende Vorspannkammer (8) über mindestens zwei unabhängig voneinander steuerbare Schaltelemente (16, 17) mit der Arbeitskammer (1) und der Ausgleichskammer (2) hydraulisch verbunden ist, wobei durch die vom Motor in das Zweikammerstützlager eingeleiteten Schwingungen die Vorspannkammer (8) mit Hydraulikflüssigkeit zur Blockierung des weiteren Federelementes (10) auffüllbar ist.

2. Zweikammerstützlager nach Anspruch 1,
**dadurch gekennzeichnet, daß**
ein Schaltelement (16) ein zwischen Arbeitskammer (1) und Vorspannkammer (8) angeordnetes Rückschlagventil ist.

3. Zweikammerstützlager nach Anspruch 1 oder 2,
**dadurch gekennzeichnet, daß**
ein Schaltelement (17) ein zwischen Ausgleichskammer (2) und Vorspannkammer (8) angeordnetes elektromagnetisches Schaltventil ist.

4. Zweikammerstützlager mit hydraulischer Dämpfung nach dem Oberbegriff des Patentanspruches 1,
**dadurch gekennzeichnet, daß**
die Vorspannkammer (8) mit der Ausgleichskammer (2) durch eine erste Leitung, in der eine durch die in das Zweikammerstützlager eingeleiteten Schwingungen angetriebene zur AuSüllung der Vorspannkammer (8) mit Hydraulikflüssigkeit vorgesehene Pumpeinrichtung angeordnet ist, und eine zweite Leitung mit einem darin eingesetzten elektromagnetischen Schaltventil (36) verbunden ist.

5. Zweikammerstützlager nach Anspruch 4,
**dadurch gekennzeichnet, daß**
die Pumpeinrichtung einen Plungerkolben und ein Rückschlagventil (34) aufweist, wobei das Rückschlagventil (34) zwischen Plungerkolben und Ausgleichskammer (2) angeordnet ist und eine Durchflußmöglichkeit von der Ausgleichskammer (2) zur Vorspannkammer (8) bereitstellt.

6. Zweikammerstützlager nach einem der Ansprüche 1 bis 5,
**dadurch gekennzeichnet, daß**
das blockierbare Federelement (10) zwischen einer Trennwand (6), welches eine Wandung der Ausgleichskammer bildet und einer beweglichen Bodenplatte (12), die eine Wandung der Vorspannkammer bildet, angeordnet ist.

7. Zweikammerstützlager nach einem der Ansprüche 1 bis 6,
**dadurch gekennzeichnet, daß**
das blockierbare Federelement (10) aus mindestens zwei, vorzugsweise drei, konzentrisch zur Mittellängsachse des Zweikammerstützlagers angeordneten Schraubenfedern besteht.

8. Zweikammerstützlager nach Anspruch 6,
**dadurch gekennzeichnet, daß**
die bewegliche Bodenplatte (12) an einer das Zweikammerstützlager umfassenden äußeren Gehäusewandung (9) durch eine zylindrische (3 8) und eine konische (39) Zentrierfläche in der Blockierstellung des Federelementes (10) gehalten ist.

## Claims

1. Two-chamber supporting mount with hydraulic damping, particularly for the engine-mounting system in motor vehicles, which mount is formed by a first hydraulic damping spring element, a spring element (3), at least one fluid-filled working chamber (1) and at least one equalising chamber (2) which is connected to said working chamber by an overflow duct (11), there being serially connected, downstream of the damping spring element, another, deactivatable spring element (10) disposed in a separate pretensioning chamber (8),
**characterised in that**
the pretensioning chamber (8) having the deactivatable spring element (10) is hydraulically connected, via at least two switching elements (16, 17) that can be controlled independently of one another, to the working chamber (1) and the equalising chamber (2), the pretensioning chamber (8) being capable of being filled up, as a result of the vibrations introduced into the two-chamber supporting mount by the engine, with hydraulic fluid for the purpose of deactivating the other spring element (10).

2. Two-chamber supporting mount according to claim 1,
**characterised in that**
one switching element (16) is a non-return valve disposed between the working chamber (1) and the pretensioning chamber (8).

3. Two-chamber supporting mount according to claim 1 or 2,
**characterised in that**
one switching element (17) is an electromagnetic switching valve disposed between the equalising chamber (2) and the pretensioning chamber (8).

4. Two-chamber supporting mount with hydraulic damping according to the pre-characterising clause of patent claim 1,
**characterised in that**
the pretensioning chamber (8) is connected to the equalising chamber (2) by a first line, in which a pumping apparatus, which is driven by the vibrations introduced into the two-chamber supporting mount and is provided for the purpose of filling up the pretensioning chamber (8) with hydraulic fluid, is disposed, and a second line with an electromagnetic switching valve (36) inserted therein.

5. Two-chamber supporting mount according to claim 4,
**characterised in that**
the pumping apparatus has a plunger piston and a non-return valve (34), said non-return valve (34) being disposed between the plunger piston and the equalising chamber (2) and providing the possibility of throughflow from the equalising chamber (2) to the pretensioning chamber (8).

6. Two-chamber supporting mount according to one of claims 1 to 5,
**characterised in that**
the deactivatable spring element (10) is disposed between a dividing wall (6) which forms one wall of the equalising chamber and a movable bottom plate (12) that forms one wall of the pretensioning chamber.

7. Two-chamber supporting mount according to one of claims 1 to 6,
**characterised in that**
the deactivatable spring element (10) consists of at least two, and preferably three, coil springs disposed concentrically to the central longitudinal axis of the two-chamber supporting mount.

8. Two-chamber supporting mount according to claim 6,
**characterised in that**
the movable bottom plate (12) is held on an outer housing wall (9) encompassing the two-chamber supporting bearing by a cylindrical centering face (38) and a conical centering face (39) in the immobilising position of the spring element (10).

## Revendications

1. Support à deux chambres à amortissement hydraulique, en particulier pour le support de moteur de véhicule automobile, qui est formé par un premier élément hydraulique à ressort amortisseur, un élément à ressort (3), au moins une chambre de travail (1) remplie d'un liquide et au moins une chambre de compensation (2) reliée à celle-ci par un canal de trop-plein (11), en aval de l'élément à ressort amortisseur étant monté en série un autre élément à ressort (10) pouvant être bloqué, disposé dans une chambre de précontrainte (8) séparée,
**caractérisé en ce que**
la chambre de précontrainte (8) comportant l'élément à ressort (10) pouvant être bloqué est reliée hydrauliquement, par au moins deux éléments de commande (16, 17) commandables indépendamment l'un de l'autre, à la chambre de travail (1) et à la chambre de compensation (2), la chambre de précontrainte (8) pouvant être remplie avec le liquide hydraulique, sous l'effet des oscillations introduites par le moteur dans le support à deux chambres, pour bloquer l'autre élément à ressort (10).

2. Support à deux chambres selon la revendication 1,
**caractérisé en ce que**
un élément de commande (16) est un clapet de non-retour disposé entre la chambre de travail (1) et la chambre de précontrainte (8).

3. Support à deux chambres selon la revendication 1 ou 2,
**caractérisé en ce que**
un élément de commande (17) est une soupape de commande électromagnétique disposée entre la chambre de compensation (2) et la chambre de précontrainte (8).

4. Support à deux chambres à amortissement hydraulique, selon le préambule de la revendication 1,
**caractérisé en ce que**
la chambre de précontrainte (8) est reliée à la chambre de compensation (2) par une première conduite, dans laquelle est disposé un dispositif de pompage entraîné par les oscillations introduites dans le support à deux chambres, prévu pour remplir la chambre de précontrainte (8) avec le liquide hydraulique, et une deuxième conduite avec une soupape de commande électromagnétique (36) insérée à l'intérieur.

5. Support à deux chambres selon la revendication 4,
**caractérisé en ce que**
le dispositif de pompage comporte un piston plongeur et un clapet de non-retour (34), le clapet de non-retour (34) étant disposé entre le piston plongeur et la chambre de compensation (2), et offrant une possibilité de circulation de la chambre de compensation (2) vers la chambre de précontrainte (8).

6. Support à deux chambres selon l'une des revendications 1 à 5,
**caractérisé en ce que**
l'élément à ressort (10) pouvant être bloqué est disposé entre une cloison (6), qui forme une paroi de la chambre de compensation, et une plaque de fond (12) mobile qui forme une paroi de la chambre de précontrainte.

7. Support à deux chambres selon l'une des revendications 1 à 6,
**caractérisé en ce que**
l'élément à ressort (10) pouvant être bloqué est constitué d'au moins deux, de préférence trois ressorts hélicoïdaux disposés concentriquement à l'axe médian longitudinal du support à deux chambres.

8. Support à deux chambres selon la revendication 6,
**caractérisé en ce que**
la plaque de fond (12) mobile est maintenue dans la position de blocage de l'élément à ressort (10), par une surface de centrage cylindrique (38) et une surface de centrage conique (39), contre une paroi extérieure (9) du carter comprenant le support à deux chambres.
